# EUROPEAN PATENT APPLICATION

(11) **EP 0 822 133 A1**
(43) Date of publication of application: **04.02.1998**
(21) Application number: 97111187.7
(22) Date of filing: 03.07.1997
(51) Int. Cl.: B62M 23/02

(54) **Electric motor-assisted bicycle**

(30) Priority: 03.07.1996 JP 173789/96; 04.07.1996 JP 174945/96; 04.07.1996 JP 174944/96; 05.07.1996 JP 176229/96
(71) Applicant: YAMAHA HATSUDOKI KABUSHIKI KAISHA, Iwata-shi Shizuoka-ken, 438 (JP)
(72) Inventor: Yamamoto, Satoshi, Iwata-shi, Shizuoka-ken (JP); Nakayama, Hironori, Iwata-shi, Shizuoka-ken (JP)
(74) Representative: Grünecker, Kinkeldey, Stockmair & Schwanhäusser Anwaltssozietät

(57) **Abstract**

An electric motor-assisted bicycle comprises a power unit (22,83) for outputting of a pedal force inputted to a crankshaft (13) and/or an auxiliary force received from an electric motor (21,82). Further there is provided a control unit (24;85;85') for variably controlling the output of said electric motor in accordance with running conditions detected. Said control unit is fastened to the outer surface of a casing (26;90) accommodating said power unit.

## Description

This invention relates to an electric motor-assisted bicycle comprising a power unit for outputting of a pedal force inputted to a crankshaft and/or an auxiliary force received from an electric motor, and a control unit for variably controlling the output of said electric motor in accordance with running conditions detected.

The electric motor-assisted bicycle in which the resultant of the pedal force inputted to a pedal and the auxiliary driving force from an electric motor is supplied to a wheel, is a conventional bicycle.

This electric motor-assisted bicycle is provided with a power unit for outputting the resultant of the pedal force and the auxiliary driving force from an electric motor, a pedal force detection device for detecting the pedal force, and a control unit for variably controlling the output of the electric motor according to the detected pedal force.

This type of electric motor-assisted vehicle is typically arranged such that the power unit etc are disposed separately along the underside of the main tube and fixed through brackets, as well as covered by a cover member, so as to ensure the mounting strength, to secure the space for arrangement, and to prevent damage due to external forces.

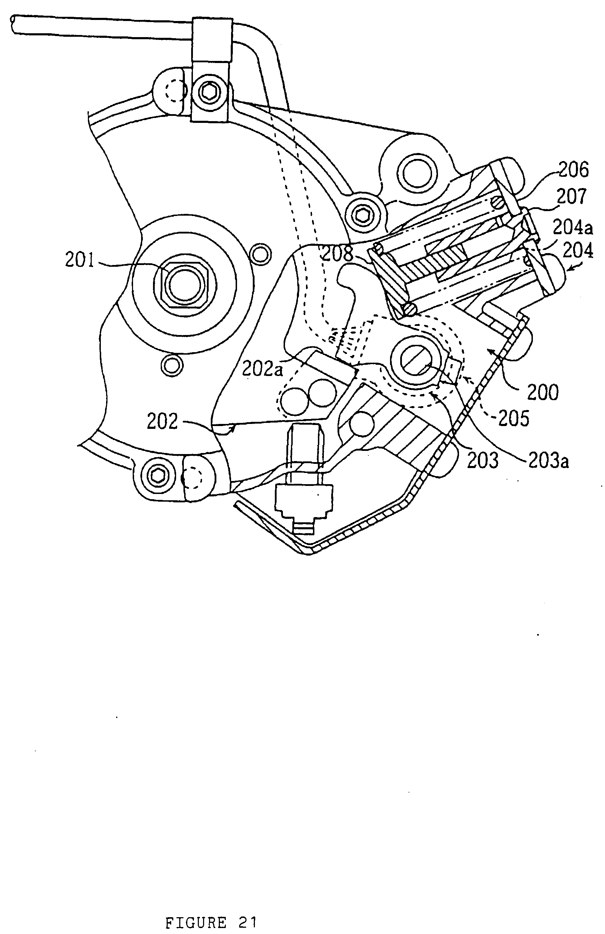

For a device for detecting the pedal force, a system shown in Fig. 21 has been employed in which a reaction force receiving section and an angle detection section are combined in one body. That is, the pedal force detection device 200 is comprised of a torque plate 202 adapted to rotate anticlockwise in the figure according to the magnitude of the pedal force acting on a crankshaft 201, a rotary lever 203 as an angle detection section, shaft-mounted for engagement with a contact section 202a of the torque plate 202, and a reaction force receiving section 204 for urging the rotary lever 203 to rotate anticlockwise, the rotation angle of said rotary lever 203 being detected by a potentiometer 205. The reaction force receiving section 204 is arranged such that a spring 204a is interposed between a cylinder section 207 fixed to a support plate 206 and a piston section 208 inserted in the cylinder section 207 for sliding movement.

However, the structure of the conventional electric motor-assisted bicycle, in which the power unit and the control unit are disposed separately along the main tube, needs a larger cover for covering these components as a whole, and also additional brackets for mounting respective components, thereby posing a problem of increasing assembling costs as well as parts costs. Further, the structure of disposing both units separately, tends to be complicated for the arrangement of wire harnesses and couplers around the control unit, resulting in a larger size with a greater space for arrangement.

Moreover, since the conventional pedal force detection device has a structure of the reaction receiving section and the angle detection section being combined in one body, the dimension of the protruding portion of the casing containing these components becomes great, enlarging the size of the casing as a whole. Thus, another problem arises that the degree of freedom of the mounting position is low in changing the layout of the power unit in the vehicle body.

In view of the foregoing problems, the object of this invention is to provide an electric motor-assisted vehicle capable of effecting reduced costs by decreasing assembling man hour as well as the number of parts, effecting a compact size by reducing the space for arrangement, and further, improving the degree of freedom for mounting position.

Accordingly, it is an objective of the present invention to provide an electric motor-assisted bicycle as indicated above which facilitates with simple technical means an easier assembling and a reduction of the number of parts to be assembled and simultaneously reduces the overall size and thereby improves the degree of freedom for mounting positions.

According to the present invention, this objective is solved for an electric motor-assisted bicycle as indicated above in that said control unit being fastened to the outer surface of a casing accommodating said power unit.

According to another embodiment of the invention, there is provided an electric motor-assisted vehicle comprising a power unit for outputting the resultant of the pedal force inputted to a crankshaft and the auxiliary force from an electric motor, and a control unit for variably controlling the auxiliary force from said electric motor, wherein said control unit is disposed along the outer surface, parallel to the crankshaft, of a casing of said power unit, and fixed detachably to said casing.

Further, it is possible that said control unit is disposed such that at least a part of said control unit is hidden within a mounting bracket for mounting said power unit on a body frame, when viewed in profile.

In a further embodiment of the present invention, an electric motor-assisted vehicle comprising a power unit for outputting the resultant of the pedal force inputted to a crankshaft and the auxiliary force from an electric motor, a pedal force sensor for detecting said pedal force, and a control unit for variably controlling the auxiliary force from said electric motor according to the pedal force detected by said pedal force sensor, wherein said control unit and pedal force sensor are disposed along the outer surface, parallel to the crankshaft, of a casing of said power unit, and fixed detachably to said casing.

Thereby, it is advantageous when said power unit is disposed coaxially with the crankshaft and provided with a planetary gear mechanism in which the pedal force is inputted to a planetary gear and outputted from one of a ring gear and a sun gear, and wherein said pedal force sensor is formed separately with a reaction force receiving section for urging the other of said ring gear and sun gear to rotate against the reaction force acting on said other gear, and with an angle detection section for detecting the rotation angle of said other gear, said reaction force receiving section and angle detection section being disposed along the outer surface, parallel to the crankshaft, of said casing.

In that case, it is possible that a rotary shaft of said angle detection section is disposed in the direction vertical to the crankshaft.

According to a still further embodiment of the present invention, said pedal force sensor is disposed such that at least a part of said pedal force sensor is hidden within a mounting bracket for mounting said power unit on a body frame, when viewed in profile.

Further, it is advantageous when a speed sensor for detecting the vehicle speed is disposed along the outer surface, parallel to the crankshaft, of a casing of said power unit, and fixed to said casing.

Moreover, it is preferable when said control unit, pedal force sensor, and speed sensor are disposed such that at least a part of each of said control unit, pedal force sensor, and speed sensor is hidden within a mounting bracket for mounting said power unit on a body frame, when viewed in profile.

Further, in the above-described conventional structure, the power unit and the control unit are disposed separately, so that wiring of the wire harness and couplers around the control unit is likely to be complicated, resulting in a greater body size with a larger space for arrangement.

In view of the foregoing, it is advantageous to provide the electric motor-assisted bicycle in which manufacturing costs can be further lowered by reducing assembling man hour and the number of parts; wiring of the wire harness is simplified; and a smaller product can be effected by decreasing the layout space of the components.

Therefore, it is preferable, when said control unit is disposed along and fixed to the transversely external end surface of said casing of said power unit.

In this case, it is advantageous when said control unit has a through hole, and said crankshaft passes through the the through hole.

In this invention, a rotary type potentiometer and a reciprocal type linear potentiometer can be employed for the pedal power detection device.

Herein, the term, the "outer surface, parallel to the crankshaft, of the casing," is defined as the outer surface of the casing other than the faces crossing the crankshaft.

Other preferred embodiments of the present invention are laid down in further dependent claims.

In the following, the present invention is explained in greater detail with respect to several embodiments thereof in conjunction with the accompanying drawings, wherein:
Fig. 1 is a left side view of an electric motor-assisted bicycle according to an embodiment of the invention of claim 1 and 2;
Fig. 2 is a sectional plan view of the power unit of the electric motor-assisted bicycle;
Fig. 3 is a left side view partly in section of the power unit;
Fig. 4 is a left side view showing the power unit being mounted on the vehicle;
Fig. 5 is a right side view showing the power unit being mounted on the vehicle;
Fig. 6 is a rear side view showing the power unit being mounted on the vehicle;
Fig. 7 is a left side view of an electric motor-assisted bicycle according to an embodiment of this invention of claim 3 through 7;
Fig. 8 is a left side view showing the auxiliary drive unit of the electric motor-assisted bicycle;
Fig. 9 is a left side view of the power unit of the auxiliary drive unit;
Fig. 10 is a plan view of the power unit;
Fig. 11 is a sectional bottom view of the power unit;
Fig. 12 is a left side view showing the pedal force detection device of the power unit;
Fig. 13 is a structural illustration of the pedal force detection device;
Fig. 14 is a left side view of an electric motor-assisted bicycle according to an embodiment of the invention of claim 1-3;
Fig. 15 is a left side view of the power unit of the electric motor-assisted bicycle;
Fig. 16 is a sectional plan view of the power unit;
Fig. 17 is a left side view of the power unit with the cover member being removed;
Fig. 18 is a left side view of the power unit;
Fig. 19 is a plan view of the power unit;
Fig. 20 is a structural illustration of the control unit; and
Fig. 21 is a side view partly in section showing a conventional pedal force detection device.

Advantageous embodiments of this invention will be described below with reference to the accompanying drawings.

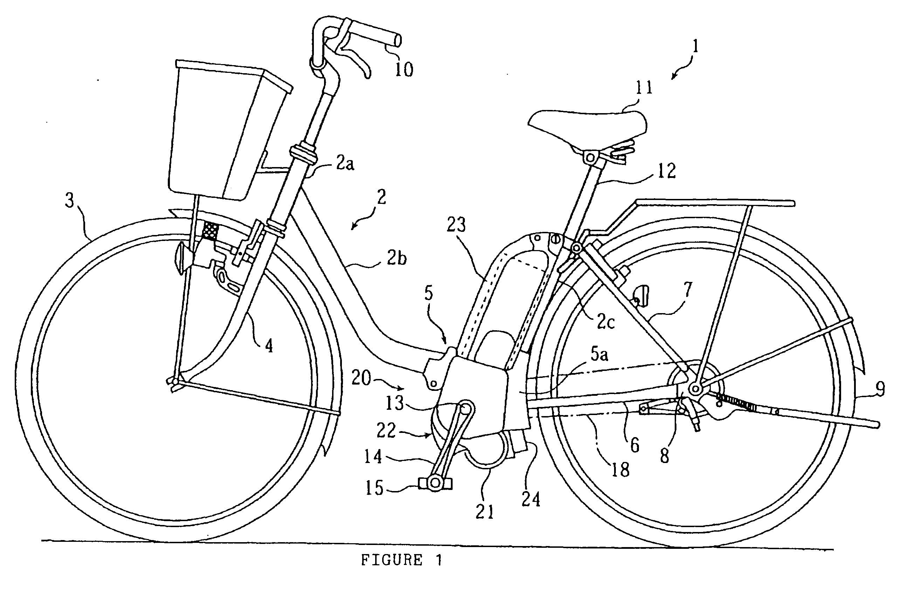

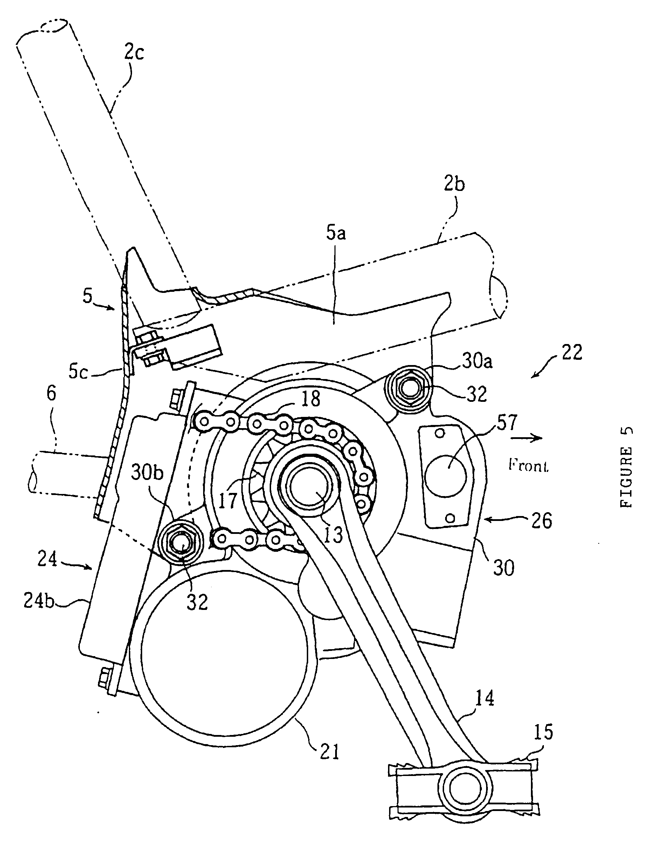

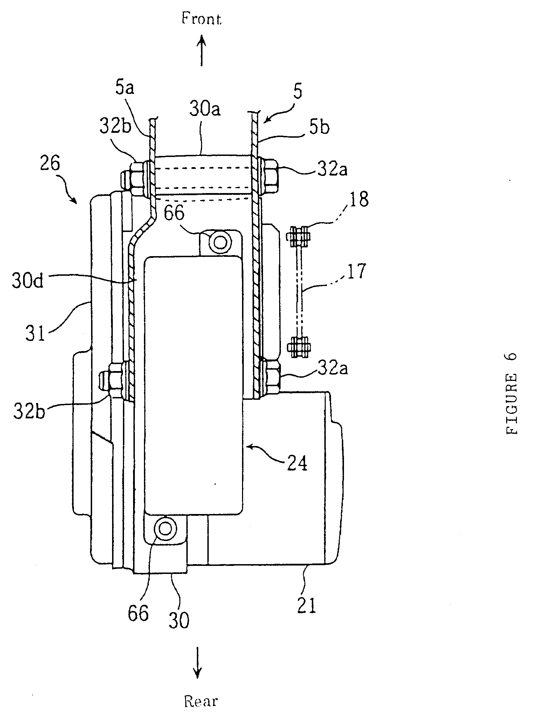

Fig. 1 through Fig.6 are views illustrating an electric motor-assisted bicycle according to an embodiment of this invention.

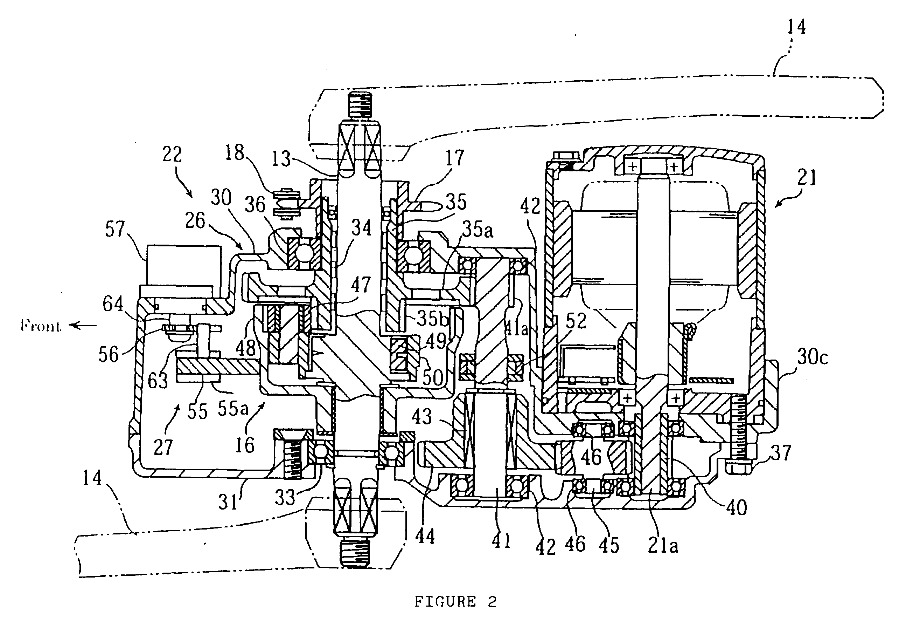

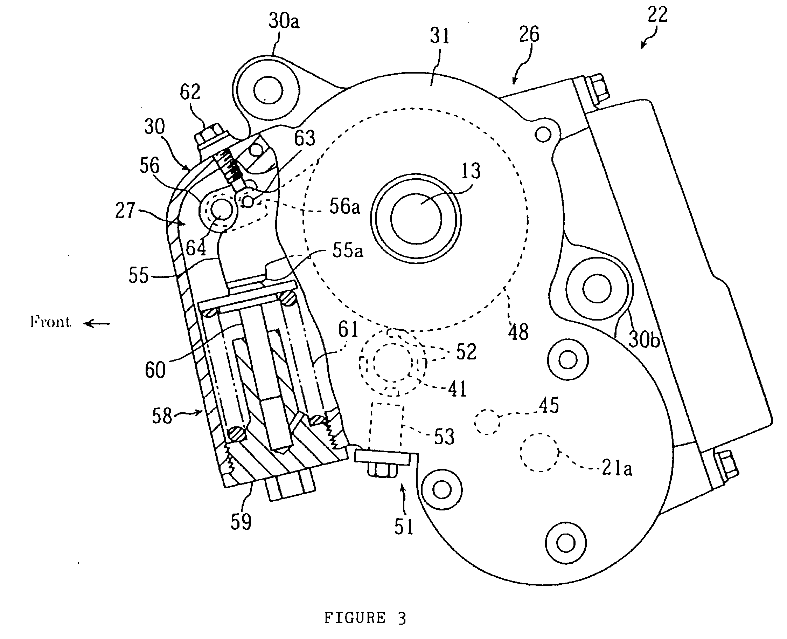

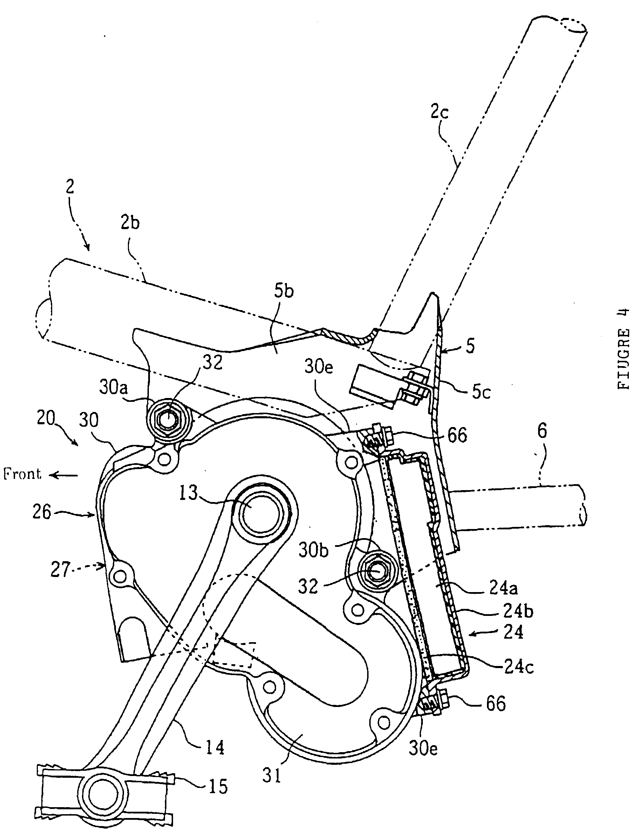

Fig. 1 is a left side view of the electric motor-assisted bicycle; Fig. 2 and Fig. 3 are a sectional view and a side view partly in section of the power unit, respectively; Fig. 4 through Fig. 6 are a left side view, a right side view, and a rear view, respectively, of the power unit being mounted on the vehicle body. As used herein, the terms, "front and rear," and "right and left," means front and rear, and right and left when viewed in the moving direction of the bicycle.

In the figure, numeral 1 designates an electric motor-assisted bicycle; a body frame 2 is arranged such that a head pipe 2a supporting, for rotation, a front fork 4 having a front wheel 3 supported thereon for revolution, a main tube 2b extending downwardly toward the rear from the head pipe 2a, and a seat tube 2c rising upwardly from the rear end of the main tube 2b, are joined together.

At the connection of the main tube 2b and the seat tube 2c is fixed a bracket 4 by welding. The bracket 5, of approximately an arc shape in profile and made of sheet metal, is formed in a shape of approximately a letter C in section, with right and left walls 5a, 5b covering the tube connection at the right and left sides, and an upper wall 5c covering the space between the right and left walls at the rear and the top.

To the bracket 5 are connected the front ends of a pair of right and left chain stays 6 extending reawardly, and the rear ends of the chain stays 6 and the upper end of the seat tube 2c are connected by a pair of right and left seat stays 7. Each pair of the chain stays 6 and the seat stays 7 are joined together through a rear wheel bracket 8, on which is supported a rear wheel 9 for revolution. At the top of the front forks is mounted a handle 10, and in the top of the seat tube 2c is inserted, for height adjustment, a seat pillar tube 12 with a saddle 11 mounted thereon.

A drive unit 20 is supported by the mounting bracket 5 in suspended relation. The drive unit 20 is comprised of a man-powered drive mechanism for driving the rear wheel 9 for revolution through the pedal force inputted to a crankshaft 13, and an electric motor drive mechanism for driving the rear wheel 9 for revolution through the auxiliary drive force from an electric motor 21. The pedal force and the auxiliary drive force are transmitted to the rear wheel after combined in a power unit 22.

The man-powered drive mechanism is arranged such that the crankshaft 13 is disposed, for rotation, in the power unit 22 fixed to the mounting bracket 5 so as to penetrate the same unit transversely; cranks 14 are fixed to opposite ends of the crankshaft 13; pedals 15 are mounted to the ends of the cranks 14; and the pedal force inputted to the crankshaft 13 is transmitted from a planetary gear speed increasing mechanism 16 (described below) to the rear wheel 9 through a chain sprocket 17, chain 18, and free wheel (not shown).

The electric motor drive mechanism is comprised of the power unit 22 for outputting the resultant of the auxiliary force from the electric motor 21 and the pedal force, a battery 23 for supplying electric power to the electric motor 21, and a control unit 24 for variably controlling the auxiliary force from the electric motor 21.

The battery 25, of approximately a rectangular parallelepiped shape, contains a plurality of Ni-Cd battery cells, and is secured to the front side of and along the seat tube 2c. The battery 23 is provided with a discharging terminal to be connected to the motor when mounted on the vehicle, and a charging terminal (not shown), enabling the battery 23 to be charged either on the vehicle or in the home when removed from the vehicle body.

The power unit 22 is comprised of the planetary gear type speed increasing mechanism 16 and a pedal force detection device 27 both contained in a casing 26 of aluminum die casting. The casing 26 is comprised of a case body 30 and a cover member 31 for closing the opening formed in the left wall of the case body 30, the cover member 31 being bolted to the case body 30.

On the front and the rear portions of the upper wall of the case body 30 are formed integrally bosses 30a, 30b extending transversely, respectively. The case body 30 is fastened to the mounting bracket 5, with the bosses 30a, 30b positioned between the right and left walls 5a, 5b of the mounting bracket 5, bolts 32a passing therethrough, and nuts 32b fitted on the bolts.

In the casing 26 is inserted the crankshaft 13 with its ends protruding outwardly from the casing, and the left end of the crankshaft 13 is supported by the boss section of the cover member 31 through a bearing 33. On the crankshaft 13 at the left end is fitted, through a bearing 34, a resultant force shaft 35 of approximately a cylindrical shape for rotation relative to the crankshaft, and at the axially middle portion of the resultant force shaft 35 is formed integrally an output gear 35a of a large diameter. The resultant force shaft 35 is supported by the boss section of the case body 30 through a bearing 36, and the chain sprocket 17 is spline fitted on the resultant force shaft 35 at the external end.

At the bottom of the case body 30 is formed integrally a motor mounting seat 30c, on which is fastened the electric motor 21 with bolts 37, together with the cover member 31. The rotary shaft 21a of the electric motor 21 is disposed parallel to the crankshaft 13, protruding into the case body 30. Over the protruding portion of the rotary shaft 21a is spline-fitted a small gear 40, which is supported, at both ends, by the case body 30 and the cover member 31.

Between the crankshaft 13 and the rotary shaft 21c is disposed a drive shaft 41 parallel therewith, which is supported by the case body 30 and the cover member 31 through bearings 42. On the drive shaft 41 at the left end is fitted, through an one-way clutch 43, a large gear 44, which is engaged with the small gear 40 on the rotary shaft 21a through an intermediate gear 45. The intermediate gear 45 is disposed between the drive shaft 41 and the rotary shaft 21a, and supported by the case body 30 and the cover member 31 through bearings 46. At the right end of the drive shaft 41 is formed integrally a small gear 41a, which is engaged with the output gear 35a of the resultant force shaft 35.

On the crankshaft 13 at the axially middle portion is fitted the above-mentioned planetary gear speed increasing mechanism 16, which is comprised of a sun gear 35b formed integrally at the inner end of the resultant force shaft 35, a plurality of planetary gears 47 fitted around the sun gear 35b for revolution thereround as well as for rotation about their axes, and a ring gear 48 of approximately a bowl-like shape, in engagement with the planetary gears 47. The ring gear 48 is fitted on the crankshaft 13 for rotation relative thereto. The planetary gears 47 are supported, for rotation, on the carrier 50 fitted over the crankshaft 13 through an one-way clutch 49.

Thus, the pedal force inputted to the crankshaft 13 is transmitted to the resultant force shaft 35 through the planetary gear speed increasing mechanism 16, and further to the rear wheel 9 through the chain sprocket 17 and the chain 18. On the other hand, the drive force from the electric motor 21 is transmitted from the drive shaft 41 to the output gear 35a through the small gear 40, intermediate gear 45, and large gear 44, and further to the rear wheel 9 after combined with the pedal force from the crankshaft 13 at the output gear 35a.

At the axially middle portion of the drive shaft 41 is disposed a speed detection device 51. The speed detection device 51 is comprised of four magnets 52 disposed around the drive shaft 41 at regular angular intervals, and a reed switch type speed sensor 53 facing the magnet ring, which speed sensor 53 is bolted to the bottom wall of the case body 30. In the speed detection device 51, the rotational speed of the crankshaft 13 is increased, in two steps, from the planetary gear speed increasing mechanism 16 to the output gear 35a and further to the small gear 41a, and the increased rotational speed at the drive shaft 41, ie, the rotational speed of the magnets on the drive shaft 41 is detected by the reed switch type sensor 53, therefore sufficiently high accuracy of detection can be obtained even with a small number of magnets, thereby effecting reduced costs.

At the front of the casing 26 is disposed the pedal force detection device 27. The pedal force detection device 27 is comprised of a torque plate 55, of an approximately hooked shape, attached to the front portion of the ring gear 48, a rotary lever 56 swingable in association with the rotary movement of the torque plate 55, a potentiometer 57 for detecting the rotation angle of the lever 56, and a pushing mechanism 58 for biasing the torque plate 55 in the direction opposite to its rotational movement.

The pushing mechanism 58 is arranged such that a piston 60 is inserted, for forward and backward movement, in a cylinder 59 screwed fixedly in the case body 30, and a coil spring 61 is disposed between the piston 60 and the cylinder 59, the piston 60 being in contact with the end face 55a of the torque plate 55.

The bent portion of the torque plate 55 is in contact with a stopper bolt 62 for adjusting zero point of the potentiometer screw-mounted to the case body 30, which stopper bolt 62 restricts the clockwise rotational movement of the torque plate 55. A pin 63 is planted fixedly in the bent portion of the torque plate 55.

At the top of the rotary lever 56 is formed a groove 56a, where the pin 63 is engaged with the lever. In the base of the rotary lever 56 is fitted fixedly an input shaft 64 of the potentiometer 57, which is bolted to the right wall at the front of the case body 30. This potentiometer 57 is adapted to detect the rotation angle of the input shaft 64, and to output the detected values to the control unit 24 over a lead wire (not shown).

The control unit 24 is arranged so as to determine the magnitude of the pedal force applied to the pedal 15, from the detected value of the potentiometer 57, to determine the rotational speed from the speed sensor 53, to calculate the magnitude of the auxiliary drive force based on a built-in auxiliary drive force control map, and to supply an electric current corresponding to the auxiliary drive force from the battery 23 to the electric motor 21. The auxiliary drive force is set such that the ratio of the auxiliary force to the pedal force will be nearly one for the vehicle speed in the range of 0 to 15 Km/h, decreased gradually for the vehicle speed over 15 km/h, and reduced to zero when the vehicle speed reaches 24 Km/h.

The control unit 24 has a structure in which an electronic component 24a soldered on a substrate 24c is fixed, for heat transmission, to a metallic control box 24b, resin is filled in the vacant space, and the control box 24b is fastened, with bolts 66, detachably to a heat releasing boss 30e provided in the case body 30. The upper half of the control unit 24 is located inside the mounting bracket 5 and surrounded by the right and left walls 5a, 5b, and the upper wall 5c.

Now, functions and effects of this embodiment will be described. According to this embodiment, the control unit 24 is fixed on the rear wall surface of the case body 30 of the power unit 22 and integrated with the power unit 22, so that a large cover member and additional mounting brackets required for conventional separate arrangement, can be eliminated, thereby reducing assembling costs as well as parts costs.

Further, the power unit 22 and the control unit 24 are integrated together, so that the length of wires from the unit body 24a to the motor 21, potentiometer 57, and speed sensor 51, can be kept small, the wiring around the control unit 24 can be simplified, and the degree of freedom can be improved for the layout in mounting these components on the vehicle, thereby reducing the space for arrangement, and effecting a smaller-sized vehicle as a whole.

Furthermore, since the heat releasing boss 30e is formed on the rear wall surface of the case body 30, and the control box 24b of the control unit 24 is brought into contact with the heat releasing boss 30e, heat generated in the control unit 24 can be released to the case body 30, thereby restricting the temperature rise in the control unit 24.

According to this embodiment, the upper half of the control unit 24, which is located in the mounting bracket 5 for mounting the power unit 24 on the vehicle frame, is covered by the right and left walls 5a, 5b, and upper wall 5c, so that damage due to the flying stones etc can be prevented without any additional separate cover members, which also reduces costs. In addition, the control unit 24 can be disposed by making use of the vacant space between the rear of the case body 30 and the bracket 5, effecting a smaller-sized product.

Further, when a main switch, pilot lamp etc disposed around the handle 10, are connected to the control unit 24 through wires, the wiring passing through the main tube 2b, can be joined to the control unit 24 inside the bracket 5, thereby preventing external exposure of couplers without impairing outside appearance, as well as damage due to external forces.

Moreover, the control unit 24 is disposed behind the power unit 22 and the pedal force detection device 27 in front of the power unit 22, therefore the height of the main tube from the ground can be kept low compared with the case when the control unit and the pedal force detection device, for example, may be disposed between the main tube and the power unit below the main tube, thereby improving the convenience in getting on and off the vehicle. In addition, the space between the power unit and the main tube becomes small, so that the vertical dimension of the mounting bracket 5 can be reduced, thereby increasing the stiffness of the mounting bracket when the power unit is mounted thereon. In other words, if the control unit and the pedal force detection device are disposed between the main tube and the power unit below the main tube, the arm length of the mounting bracket for supporting the power unit must be increased, which posed a problem of stiffness down.

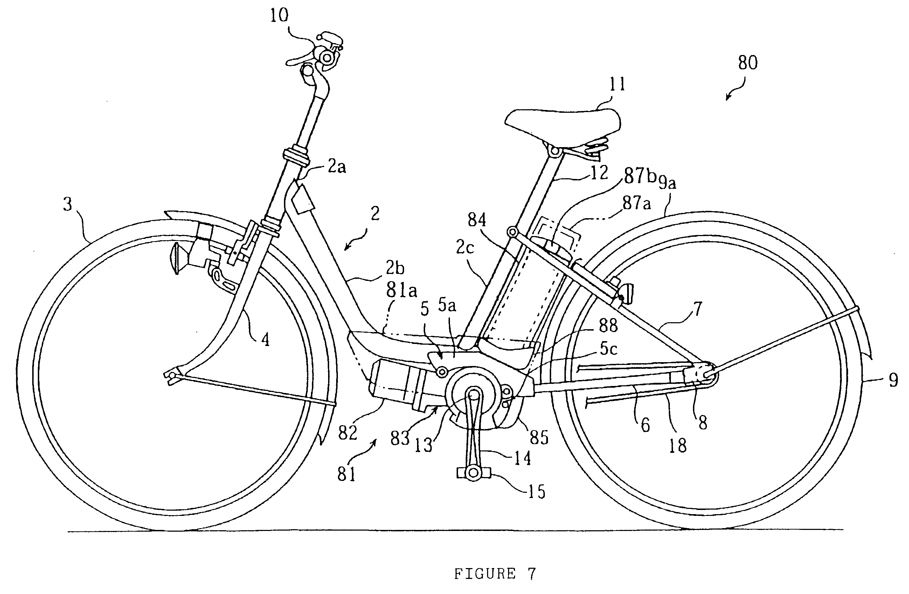

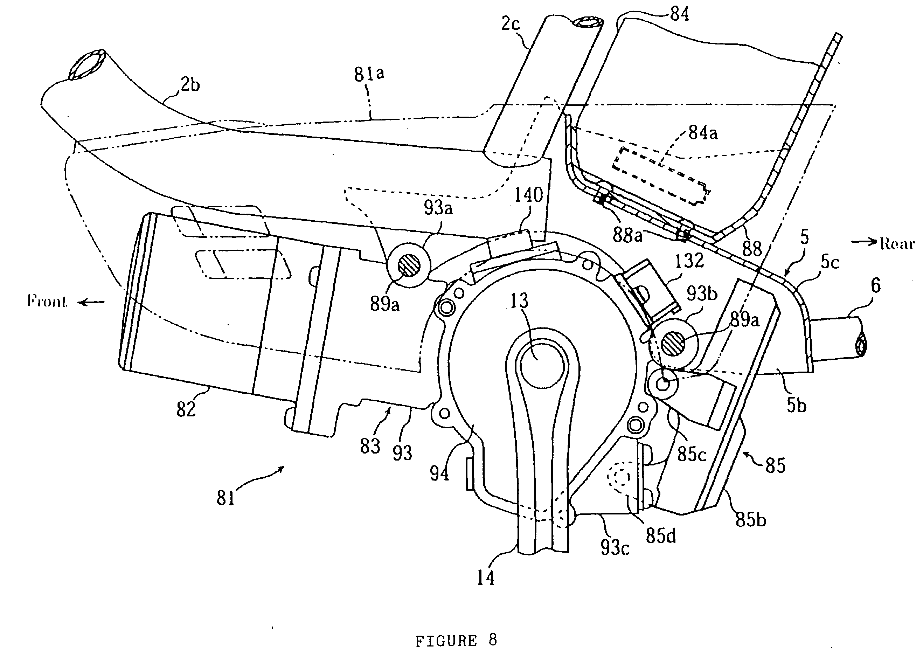

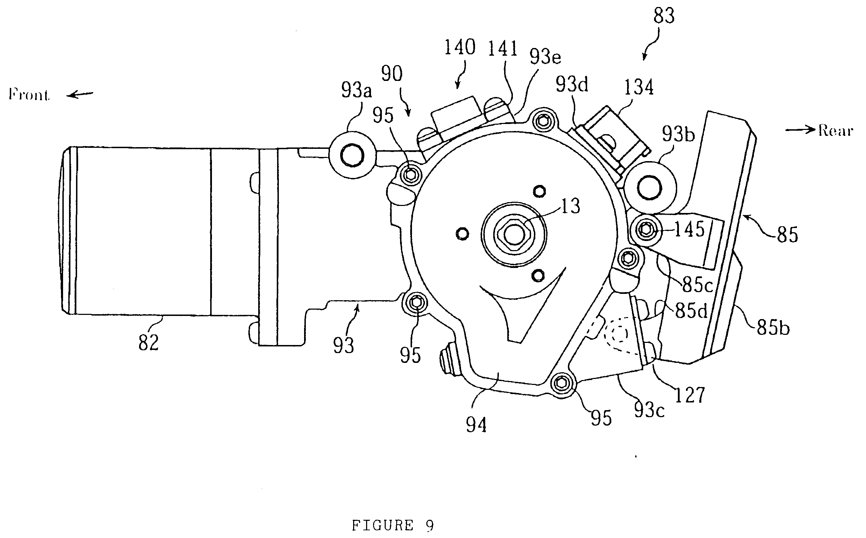

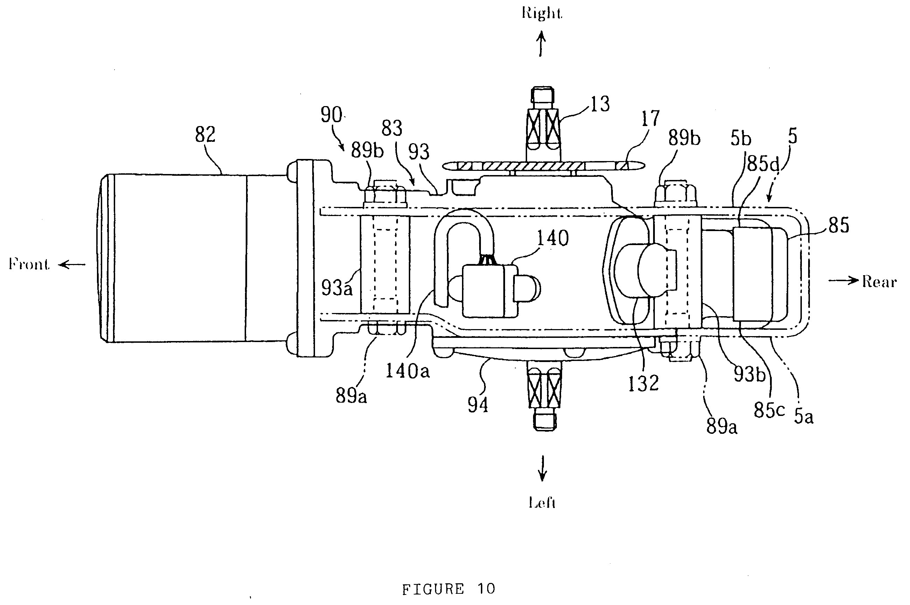

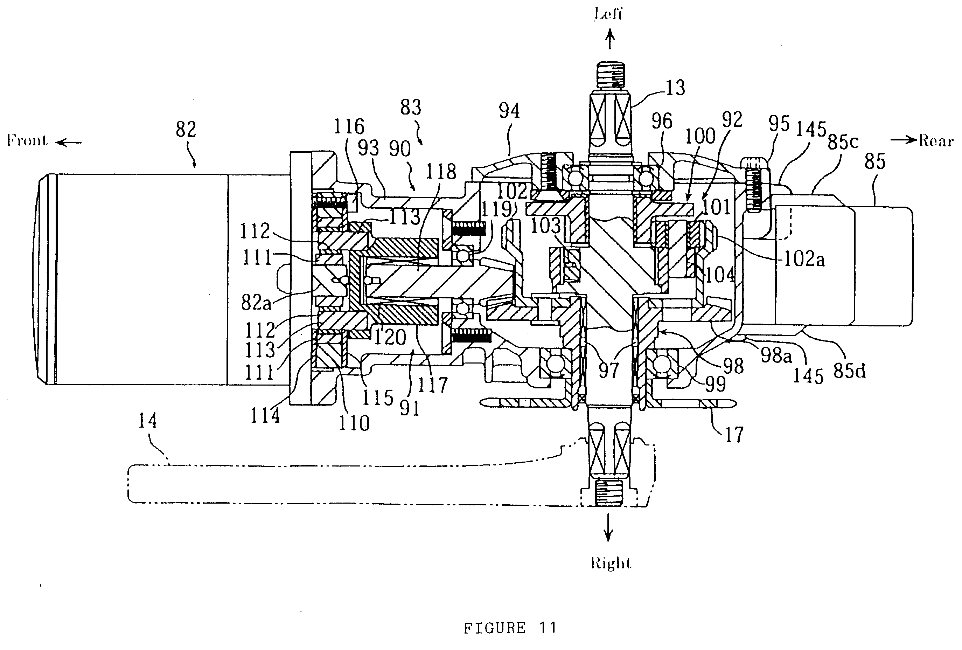

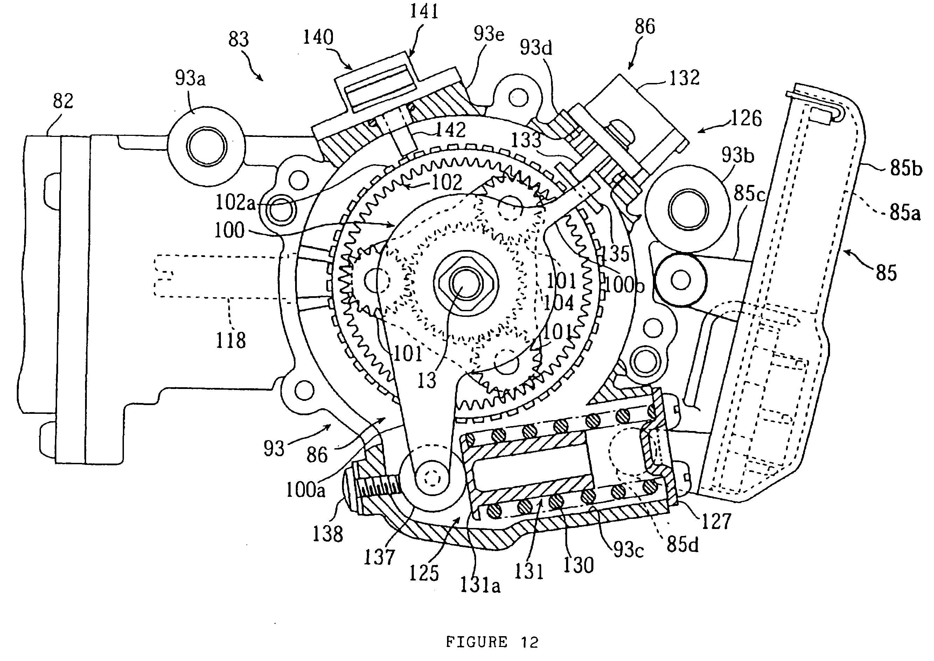

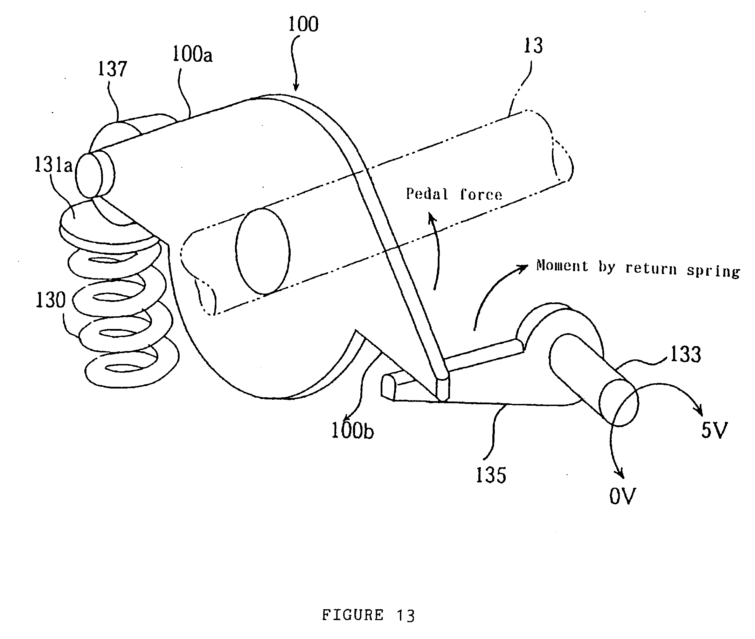

Fig. 7 through Fig. 13 are views illustrating an electric motor-assisted bicycle according to another embodiment of this invention ; Fig. 7 is a left side view of the electric motor-assisted bicycle; Fig. 8 is a left side view of the auxiliary drive unit; Fig. 9 through Fig. 11 are a left side view, a plan view, and a sectional bottom view, respectively; Fig. 12 and Fig. 13 are a left side view and a structural illustration of the pedal force detection device. In the figures, the same reference numerals as in Fig. 1 represent the same or the equivalent components.

In an electric motor-assisted bicycle of this embodiment, a drive unit 81 is supported by a body frame 2 in suspended relation. The drive unit 81 is comprised of a power unit 83 for outputting the resultant of the pedal force inputted to a crankshaft 13 and the auxiliary drive force from an electric motor 82, a battery 84 for supplying electric power to the electric motor 82, a control unit 85 for controlling the auxiliary force from the electric motor 82, and a pedal force detection device 86 for detecting the pedal force. Numeral 81a designates a cover for covering the drive unit 81 from upside.

The battery 84, of approximately a rectangular parallelepiped shape, contains a plurality of Ni-Cd battery cells. The battery 84 is disposed behind and along the seat tube 2c constituting the body frame 2, and inserted, at the bottom end, in a support box 88, of a bottomed cylindrical shape, fixed to the upper wall 5c of a mounting bracket 5 with bolts 88a. This insertion causes a discharging female terminal 84a at the bottom of the battery to be electrically connected to a discharging male terminal (not shown) on the support box. Also, the battery protrudes, at the top end, upwardly through the space between right and left stays 7 while surrounded by the seat stays 7, seat tube 2c, and a rear fender 9a, thereby allowing its insertion and removal only in the vertical direction. To the head of the battery 84 are attached a grip 87a and a charging terminal 87b.

The power unit 83 is comprised of a planetary roller type speed reducing mechanism 91, a planetary gear type speed increasing mechanism 92, and a pedal force detection device 86, all contained in a casing 26 of aluminum die casting. The casing 90 is comprised of a case body 93 of approximately an bottomed cylindrical shape, and a cover member 94 for closing the opening-formed in the left wall of the case body 93, the cover member 94 being fastened, with bolts 95, detachably to the case body 93.

On the front and the rear portions of the upper wall of the case body 93 are formed integrally bosses 93a, 93b extending transversely, respectively. The case body 93 is fastened to the mounting bracket 5 with bolts 89a and nuts 89b, with the bosses 93a, 93b positioned between the right and left walls 5a, 5b of the mounting bracket 5. To the flanged portion at the front of the case body 93 is bolted the flanged portion on the electric motor 82, and a rotary shaft 82a of the motor 82 is disposed in the direction vertical to the crankshaft 13.

In the casing 90 is inserted the crankshaft 13 transversely with its ends protruding outwardly from the casing. The left end of the crankshaft 13 is supported, for rotation, by the boss section of a cover member 94 through a bearing 96. On the crankshaft 13 at the right end is fitted, through a bearing 97, a resultant force shaft 98 of approximately a cylindrical shape, for rotation relative thereto, and at the axially middle portion of the resultant force shaft 98 is formed integrally an output gear 98a of a large diameter. The resultant force shaft 98 is supported, for rotation, by the boss section of the case body 93 through a bearing 99, and a chain sprocket 17 is spline-fitted on the resultant force shaft 98 at the external end.

On the crankshaft 13 at the axially middle portion is fitted the above-mentioned planetary gear speed increasing mechanism 92, which is comprised of a sun gear 100 fitted, for rotation, on the crankshaft 13, three planetary gear 101 in engagement with the sun gear 100, for revolution thereround as well as for rotation about their axes, an internal gear 102 of approximately a bowl-like shape, in engagement with the planetary gears 101. The planetary gears 101 are supported, for rotation, on the carrier 104 fitted on the crankshaft 13 through an one-way clutch 103 for blocking transmission of the rotational force from the rear wheel to the crankshaft 13.

To the bottom wall of the internal gear 102 is fixed, with rivets, an output gear 98a of the resultant force shaft 98. Thus, the pedal force inputted to the crankshaft 13 is transmitted to the output gear 98a through the internal gear 102 of the planetary gear speed increasing mechanism 92, and further to the rear wheel 9 through a chain sprocket 17 and chain 18.

On the rotary shaft 82c (acting as a sun roller) of the electric motor 82 is mounted the planetary roller type speed reducing mechanism 91, which is comprised of an outer ring 110, of a cylindrical shape with a large diameter, fixed coaxially with the rotary shaft 82a, a plurality of planetary gears 111 disposed between the outer ring 110 and the rotary shaft 82 and in contact with both components 110, 82a, and pins 113 supporting the planetary gears 111 for rotation through bearings 112. On both end faces of the outer ring 111 are disposed guide plates 114, 115 for restricting axial movement of the rollers 111, and the guide plates 114, 115 are fastened to the flange of the motor 82 with bolts 116. The outside circumferential surface of the outer ring 110 also serves as a guide section for the motor being fixed to the case body 93, providing higher accuracy of concentricity between the motor shaft and a gear member 118 (described later).

A carrier 117, of a bottomed cylindrical shape and having the pins planted therein, receives, in its axial center, the shaft section of the output gear member 118. The output gear member 118 is supported by the case body 93 for rotation through a bearing 119, and engaged with the output gear 98a of the resultant force shaft 98. The shaft section of the output gear member 118 and the carrier 117 are coupled to each other through an one-way clutch 120, which is adapted to avoid transmission of the pedal force to the motor 82 during running only by the human power. As such, the drive force of the motor 82, while reducing its speed through the planetary roller type speed reducing mechanism 91, is transmitted from the carrier 117 to the resultant force shaft 98 through the output gear member 118, and further to the rear wheel 9 after combined with the pedal force from the crankshaft 13 at the resultant force shaft 98.

In the case body 93 is provided the pedal force detection device 86, which is, as shown in Fig. 12 and Fig. 13, comprised of a reaction force receiving section 125 disposed at the bottom of the case body 93, and an angle detection section 126 disposed at the rear of the upper wall, both components 125, 126 being located separately along the outer surface of the case body 93.

The reaction force receiving section 125 is arranged such that a support plate 127 is bolted to the opening of a receiving portion 93c formed in the bottom wall of the case body 93, a coil spring 130 is disposed inside the receiving portion 93c, and a cylindrical rod member 131 having a flange 131a formed integrally therewith, is inserted in the coil spring 130 which is held between the flange 131a and the support plate 127.

The angle detection section 126 has a structure in which a potentiometer 132 is bolted to a mounting seat 93d formed on the upper wall of the case body 93. An output shaft 133 of the potentiometer 132 is disposed in the direction vertical to the crankshaft 13, protruding into the case body 93. To the tip of the input shaft 133 is fixed a rotary lever 135, which is biased, by a spring (not shown), clockwise when viewed from the input shaft side (see Fig. 13).

The sun gear 100 is formed, integrally, with a pushing arm 100a and a detection arm 100b. On one end of the pushing arm 100a is shaft-mounted a roller 137, which is in contact with the end face of the flange 131a of the rod member 131. The roller 137 also engages the stopper bolt 138, for use in zero point adjustment, screwed In the case body 93 for advancing and retracting movement, thereby restricting the clockwise rotational movement of the pushing arm 100a. The detection arm 100b is in contact with the rotary lever 135 of the input shaft 133.

The sun gear 100 rotates to an angular position where the pedal force inputted to the crankshaft 13 and the biasing force of the coil spring 130 are balanced, causing the rotation of the detection arm 100b. This rotational movement causes the input shaft 133 to rotate through rotary lever 135; the rotation angle of the input shaft 133 is detected by the potentiometer 132; and the detected value is outputted to the control unit 85 over a lead wire.

At the front of the upper wall of the case body 93 is disposed a speed sensor 140, which is arranged such that a sensor body 131 is bolted to a mounting seat 93e of the case body 93, with a detection section 142 of the sensor body 141 protruded into the case body 93. The detection section 142 is disposed facing, with a slight clearance, to a tooth section 102a formed on the outside circumferential surface in a given pitch. The speed sensor 140 is adapted to detect changes in the magnetic resistance of the tooth section 102a in association with the rotation of the internal gear 102, and to output the detected values to the control unit 85 over a lead wire 140a. The tooth section 102a is formed at the same occasion when the gear teeth of the internal gear 102 are formed by forging.

The control unit 85 is comprised of a unit body 85a and a control box 85b for housing the unit body, and the control box 85b is disposed on the rear wall surface of the case body 93. The control box 85b is formed, integrally, with mounting pieces 85c, 85d, which are fastened, with bolts 145, to the bosses formed on the case body 93.

The operation of this control unit 85 is essentially equal to the operation of control unit 24,

The upper half of the control unit 85, the potentiometer 132, and the speed sensor 140 are located inside the mounting bracket 5 and surrounded by the right and left walls 5a, 5b, and the upper wall 5c of the bracket 5.

Now, functions and effects of this embodiment will be described.
According to this embodiment, the control unit 85, the potentiometer 132, and the speed sensor 140 are disposed along the outer surface of the casing 83 and fixed to the same, so that assembling man hour as well as the number of parts can be reduced, effecting cost reduction. In addition, the wiring around the control unit 85 can be simplified, the degree of freedom can be improved for the layout in mounting these components on the vehicle, and the drive unit can be kept small in size, as is described previous embodiment.

Further, the control unit 85, the potentiometer 132, and the speed sensor 140 are located inside the mounting bracket 5 and covered by the bracket 5, so that damage due to the flying stones etc can be prevented and the vacant space between the case body 93 and the bracket 5 can be made effective use, producing the same effects as in the previous embodiment.

In this embodiment, the reaction force receiving section 125 for biasing the sun gear 100 of the power unit 83 provided with the planetary gear speed increasing mechanism 92, and the angle detection section 126, are disposed separately along the outer surface of the case 93, the dimension of the protrusion of the receiving portion 93c of the case body 93 can be kept small, effecting a smaller-sized case as a whole. As a result, the degree of freedom can be improved for the layout in mounting the power unit 83 on the vehicle body.

Further, the input shaft 133 of the angle detection section 126 is disposed in the direction vertical to the cranksahft 13, so that with the cover member 94 removed as shown in Fig. 12, the angle detection section 126 can be assembled to the case body 93 while watching the positioning of the pushing arm 100a and the detection arm 100b of the sun gear 100, thereby improving the performance of assembly work. In addition, the input shaft 133 is disposed in the direction vertical to the crankshaft 13, so that the angle detection section 126 can be located within the width of the mounting bracket 5.

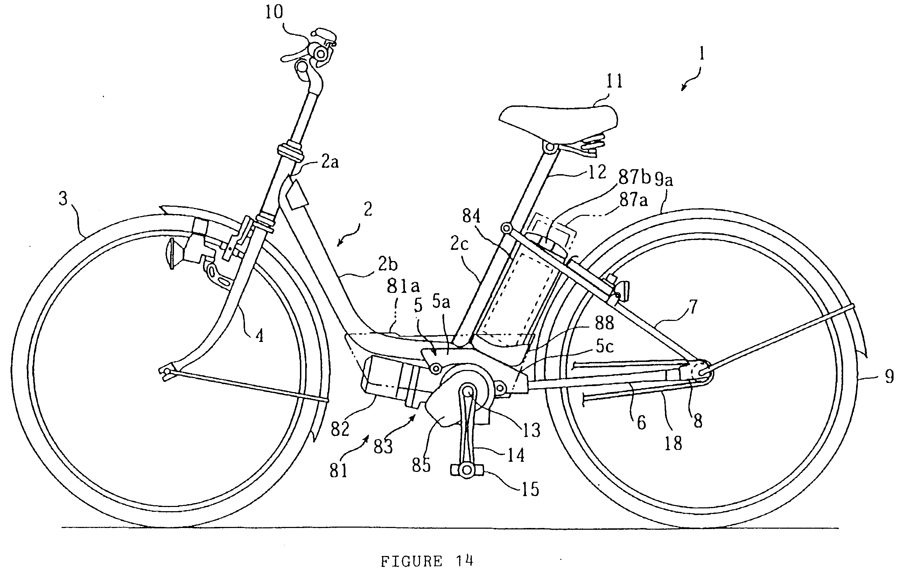

The rod member 131 engaging the pushing arm 100a, is inserted in the coil spring 130, so that the hysteresis phenomena can be controlled, that is, variation of the detected values between the pedal force measured when it is increasing and that measured when it is decreasing, can be avoided, thereby improving the assist feeling. In other words, if a system is adopted, as shown in Fig. 14, in which a coil spring 204 is held between a cylinder 207 and a piston 208 inserted thereto for sliding movement, the hysteresis due to the sliding resistance between both parts is likely to happen, and a problem may arise of poor assist feeling due to the angular displacement of the piston 208.

Another embodiment of this invention will be described below with reference to the accompanying drawings.

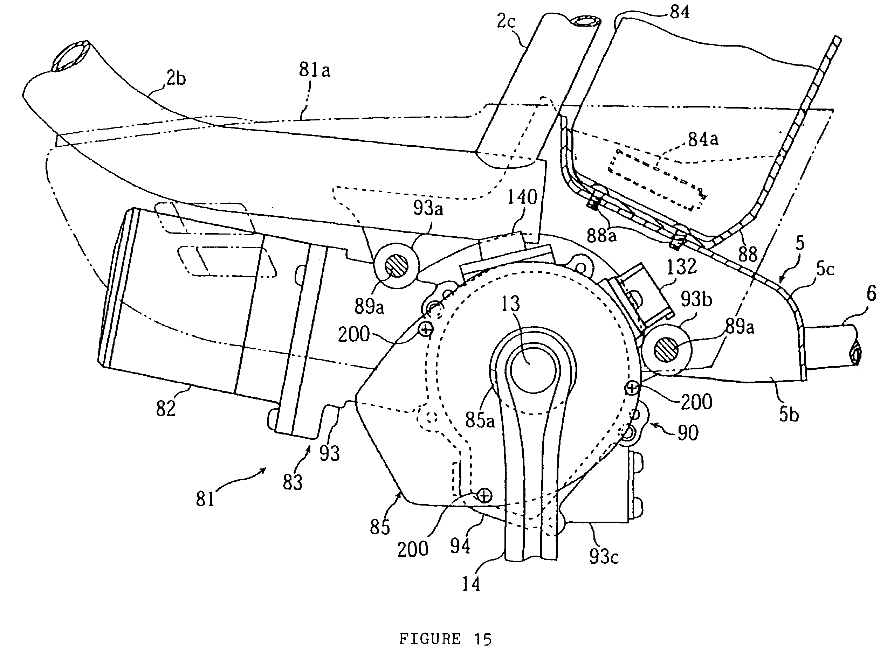

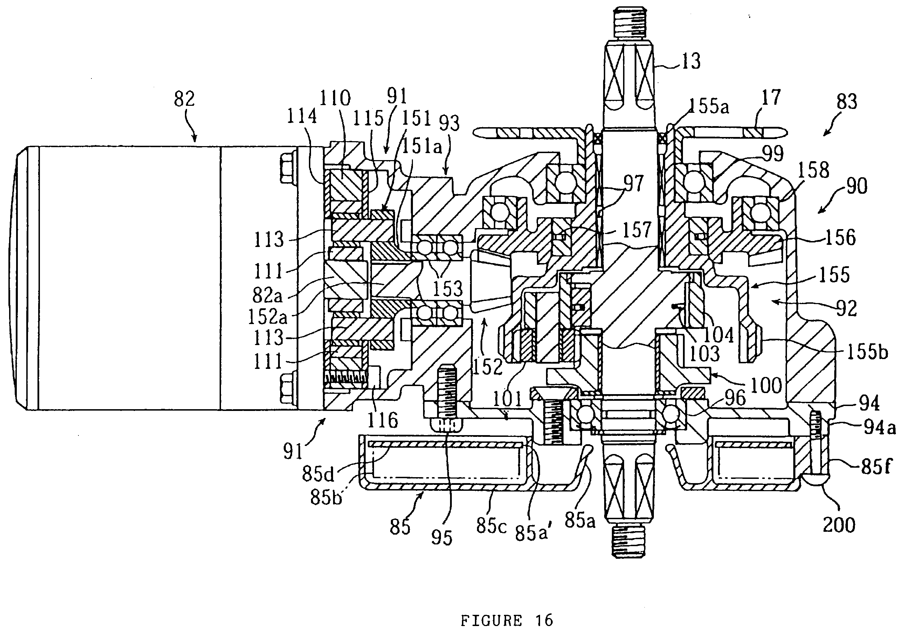

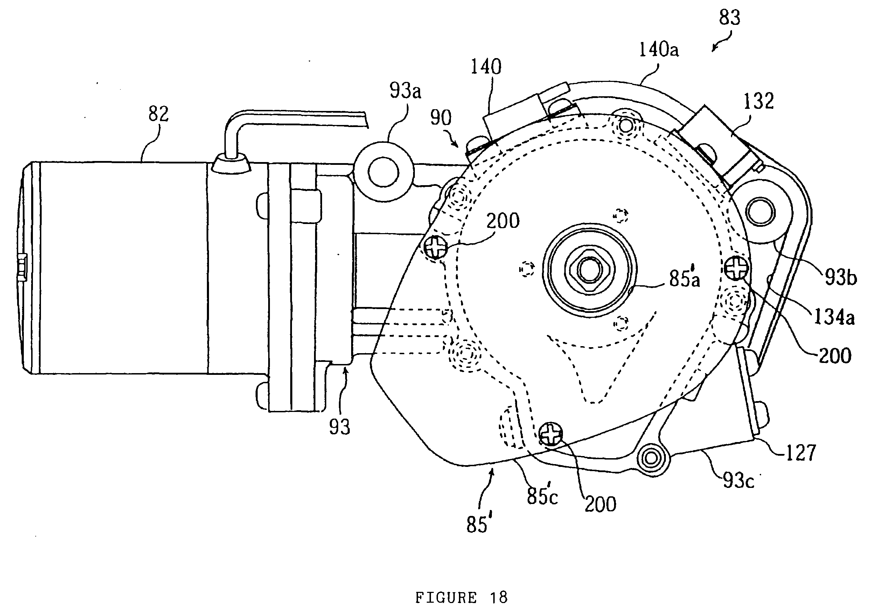

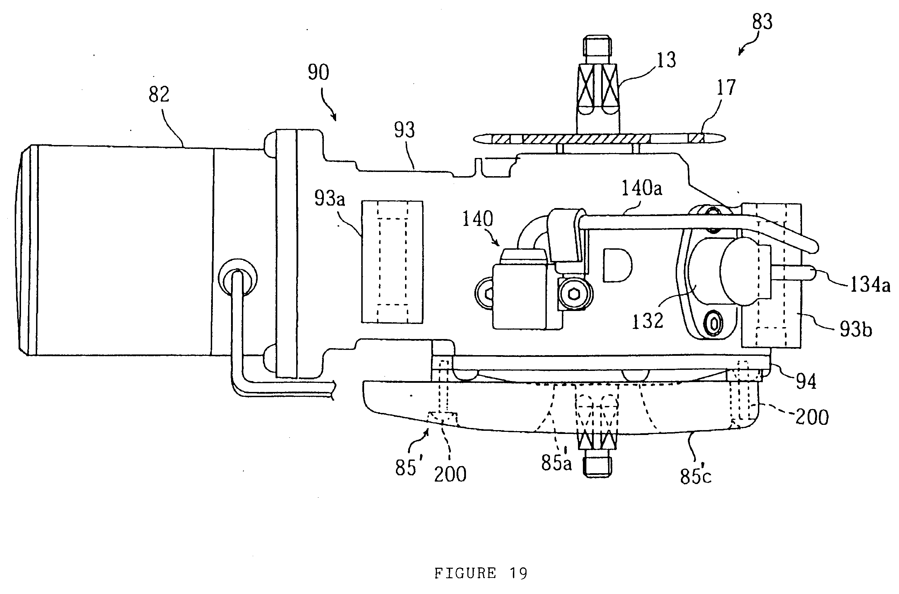

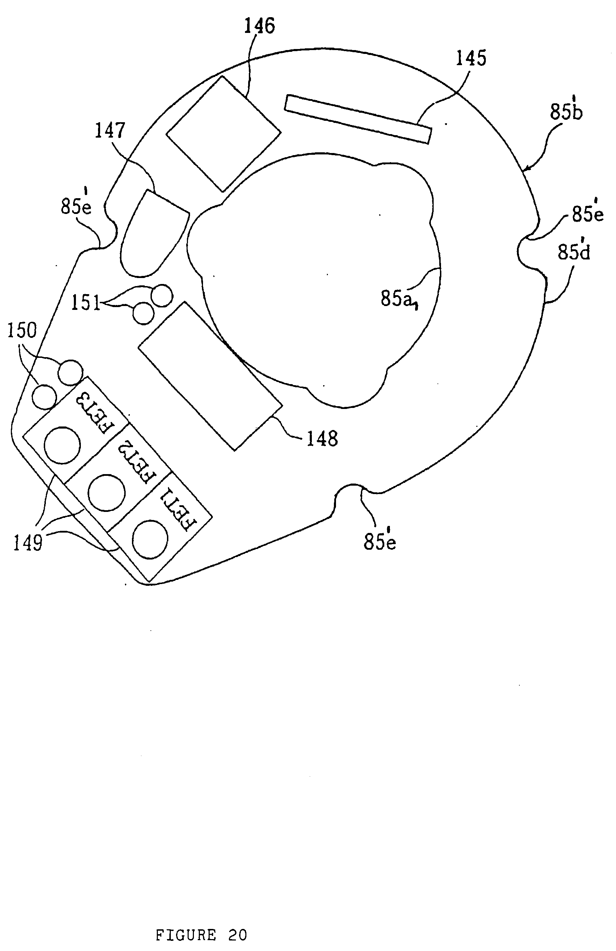

Fig. 14 through Fig. 20 are views illustrating an electric motor-assisted bicycle Fig. 14 is a left side view of the electric motor-assisted bicycle; Fig. 15 is a left side view of the drive unit; Fig. 16 through Fig. 19 are a sectional plan view, a left side view with the cover member removed, a left side view, a plan view of the power unit, respectively; and Fig. 20 is a structural illustration of the control unit. As used herein, the terms, "front and rear," and "right and left," mean front and rear, and right and left when viewed in the moving direction of the bicycle.

In the figure, numeral 1 designates an electric motor-assisted bicycle, a body frame 2 of which is arranged such that a head pipe 2a supporting, for rotation, a front fork 4 having a front wheel 3 supported thereon for revolution, a main tube 2b extending downwardly toward the rear from the head pipe 2a, and a seat tube 2c rising upwardly from the rear end of the main tube 2b, are joined together.

At the connection of the main tube 2b and the seat tube 2c is fixed a bracket 5 by welding. The bracket 5, of a shape of approximately an arc in profile and approximately a letter C in section and made of metal, is formed with right and left walls 5a, 5b covering the tube connection at the right and left sides, and with an upper wall 5c covering the space between the right and left walls at the rear and the top.

To the bracket 5 are connected the front ends of a pair of right and left chain stays 6 extending reawardly, and the rear ends of the chain stays 6 and the upper end of the seat tube 2c are connected by a pair of right and left seat stays 7. Each pair of the chain stays 6 and the seat stays 7 are joined together through a rear wheel bracket 8, on which is supported a rear wheel 9 for revolution. At the top of the front forks is mounted a handle 10, and in the top of the seat tube 2c is inserted, for height adjustment, a seat pillar tube 12 with a saddle 11 mounted thereon.

A drive unit 81 is supported by the mounting bracket 5 in suspended relation. The drive unit 81 is comprised of a man-powered drive mechanism for driving the rear wheel 9 for revolution through the pedal force inputted to a crankshaft 13, and an electric motor drive mechanism for driving the rear wheel 9 for revolution through the auxiliary drive force from an electric motor 82. The pedal force and the auxiliary drive force are transmitted to the rear wheel 9 after combined in a power unit 83. Numeral 81a designates a cover for covering the drive unit 81 from the upper side.

The man-powered drive mechanism is arranged such that the crankshaft 13 is disposed, for rotation, in the power unit 83 fixed to the mounting bracket 5, so as to penetrate the same unit transversely; cranks 14 are fixed to the opposite ends of the crankshaft 13; pedals 15 are mounted to the ends of the cranks 14; and the pedal force inputted to the crankshaft 13 is transmitted from a planetary gear speed increasing mechanism 92 (described later) to the rear wheel 9 through a chain sprocket 17, chain 18, and free wheel (not shown).

The electric motor drive mechanism is comprised of the power unit 83 for outputting the resultant of the auxiliary force from the electric motor 82 and the pedal force, a battery 84 for supplying electric power to the electric motor 82, a control unit 85 for variably controlling the auxiliary force from the electric motor 82, and pedal force detection device 86 for detecting the pedal force.

The battery 84, of approximately a rectangular parallelepiped shape, contains a plurality of Ni-Cd battery cells. The battery 84 is disposed behind and along the seat tube 2c constituting the body frame 2, and inserted, at the bottom end, in a support box 88, of a bottomed cylindrical shape, fixed to the upper wall 5c of the mounting bracket 5 with bolts 88a. This insertion causes a discharging female terminal 84a at the bottom of the battery to be electrically connected to a discharging male terminal (not shown) on the support box 88. Also, the battery protrudes, at the top end, upwardly through the space between right and left seat stays 7 while surrounded by the seat stays 7, the seat tube 2c, and a rear fender 9a, thereby allowing its insertion and removal only in the vertical direction. To the head of the battery 84 are attached a grip 87a and a charging terminal 87b.

The power unit 83 is comprised of a planetary roller type speed reducing mechanism 91, a planetary gear type speed increasing mechanism 92, and a pedal force detection device 86, all contained in a unit case 90 (casing) of aluminum die casting. The unit case 90 is comprised of a case body 93 of approximately an bottomed cylindrical shape, and a cover member 94 for closing the opening formed in the left wall of the case body 93, the cover member 94 being fastened, with bolts 95, detachably to the case body 93.

On the front and rear portions of the upper wall of the case body 93 are formed integrally bosses 93a, 93b extending transversely, respectively. The case body 93 is fastened to the mounting bracket 5 with bolts 89a, with the bosses 93a, 93b positioned between the right and left walls 5a, 5b of the mounting bracket 5. To the flanged portion at the front opening of the case body 93 is bolted the flanged portion of the electric motor 82, and a rotary shaft 82a of the motor 82 is disposed in the direction vertical to the crankshaft 13.

In the unit case 90 is inserted the crankshaft 13 transversely, with its ends protruding outwardly from the casing. The left end of the crankshaft 13 is supported, for rotation, by the boss section of a cover member 94 through a bearing 96. On the crankshaft 13 at the right end is fitted, through a bearing 97, a resultant force shaft 155a, of approximately a cylindrical shape, formed integrally in the base section of an internal gear 155 for rotation relative thereto.

On the outside circumference of the resultant force shaft 155a is mounted an output gear 156, which is supported by the case body 93 through a bearing 158. The resultant force shaft 155a and the output gear 156 are coupled to each other through an one-way clutch 157. This one-way clutch is adapted to avoid the pedal force being transmitted from the output gear 156 to the motor 82 side during running only by human power, which prevents noises generated by an output gear 152 (described later) and the output gear 156 revolving in engaged relation during the human-powered running. The resultant force shaft 155a is supported for rotation by the boss section of the case body 93 through a bearing 99, and the chain sprocket 17 is spline-fitted on the resultant force shaft 155a at the external end.

On the crankshaft 13 at the axially middle portion is fitted coaxially the above-mentioned planetary gear speed increasing mechanism 92, which is comprised of a sun gear 100 fitted, for rotation, on the crankshaft 13, three planetary gear 101 in engagement with the sun gear 100, for revolution thereround as well as for rotation about their axes, and an internal gear 155 in engagement with the planetary gears 101. The planetary gears 101 are supported, for rotation, on the carrier 104 fitted on the crankshaft 13 through an one-way clutch 103. Thus, the pedal force inputted to the crankshaft 13 is transmitted to the external gear 155 and the resultant force shaft 155a through the planetary gears 101 of the planetary gear speed increasing mechanism 92, and further to the rear wheel 9 through a chain sprocket 17 and chain 18.

On the rotary shaft 82a of the electric motor 82 is mounted the planetary roller type speed reducing mechanism 91, which is comprised of an outer ring 110, of a cylindrical shape with a large diameter, fixed coaxially with the rotary shaft 82a, a plurality of planetary rollers 111 disposed between the outer ring 110 and the rotary shaft 82a and in contact with both components 82a, 110, and pins 113 supporting the planetary rollers 111 for rotation through bearings 112. On both end faces of the outer ring 110 are disposed guide plates 114, 115 for restricting axial movement of the rollers 111, and the guide plates 114, 115 are fastened to the flange of the motor 82 with bolts 116.

The pins 113 are fixed to a disklike carrier 151 having a boss section 151a, in which is spline-fitted the shaft section 152a of the output gear 152. The output gear 152 is engaged with the output gear 156, and the shaft section 152a is supported by the case body 93 through a pair of bearings 153. Thus, the drive force of the motor 82, while reducing its speed through the planetary roller type speed reducing mechanism 91, is transmitted from the carrier 151 and the output gear 152 to the resultant force shaft 155a through the output gear 156, and further to the rear wheel 9 after combined with the pedal force from the crankshaft 13 at the resultant force shaft 155a.

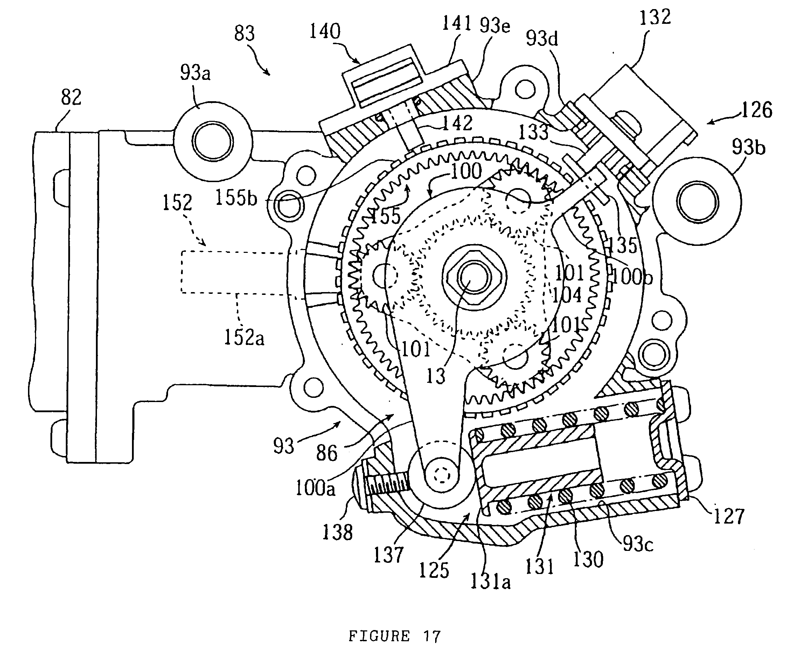

In the case body 93 is provided the pedal force detection device 86, which is, as shown in Fig. 17, comprised of a reaction force receiving section 125 disposed inside the bottom wall of the case body 93, and an angle detection section 126 disposed at the rear of the upper wall thereof, both components 125, 126 being formed separately along the outer surface of the case body 93.

The reaction force receiving section 125 is arranged such that a support plate 127 is bolted to the opening of a receiving portion 93c formed in the bottom wall of the case body 93, a coil spring 130 is disposed inside the receiving portion 93c, and a cylindrical rod member 131 having a flange 131a formed integrally therewith, is inserted in the coil spring 130 which is held between the flange 131a and the support plate 127. The rod member 131 is in contact with the inside surface of the coil spring 130 in a sliding relation and extends substantially to the middle of the spring 130.

The angle detection section 126 has a structure in which a sensor body 132 is bolted to a mounting seat 93d formed on the upper wall of the case body 93, with a sensor shaft 133 mounted thereto for rotation, and also bolted to the same a potentiometer 134 for detecting rotational angle of the sensor shaft 133. The sensor shaft 133 is disposed in the direction vertical to the crankshaft 13, protruding into the case body 93. To the tip of the sensor shaft 133 is fixed a rotary lever 135, which is biased, by a spring (not shown), clockwise when viewed from the sensor shaft side.

The sun gear 100 is formed, integrally, with a pushing arm 100a and a rotary arm 100b in a circumferentially spaced relation. On one end of the pushing arm 100a is shaft-mounted a roller 137, which is in contact with the top face of the flange 131a of the rod member 131. The roller 137 also engages a stopper bolt 138, for use in zero point adjustment, screwed in the case body 93 for advancing and retracting movement, thereby restricting the clockwise rotational movement of the pushing arm 100a. The rotary arm 100b is in contact with the rotary lever 135 of the sensor shaft 133.

The sun gear 100 rotates anticlockwise according to the magnitude of the pedal force, thus the pushing arm 100a rotates to press the coil spring 130, and the rotary arm 100b causes the sensor shaft 133 to rotate through the rotary lever 135. The rotation angle of the sensor shaft 133 is detected by the potentiometer 134, and the detected value is outputted to the control unit 85 over a lead wire 134a.

At the front of the upper wall of the case body 93 is disposed a speed sensor 140, which is arranged such that a mounting seat 93e is formed on the case body 93, and a sensor body 141 is bolted to the mounting seat 93e, with a detection section 142 of the sensor body 141 protruded into the case body 93. The detection section 142 is disposed facing, with a slight clearance, to a tooth section 155b formed on the outside circumferential surface of the internal gear 155 in a given pitch. The speed sensor 140 is adapted to detect changes in the magnetic resistance of the tooth section 155b in association with the rotation of the internal gear 155, and to output the detected values to the control unit 85 over a lead wire 140a. The tooth section 155b is formed at the same occasion when the gear teeth of the internal gear 155 are formed by forging. The potentiometer 134 and the speed sensor 140 are located inside the mounting bracket 5 and surrounded by the right and left walls 5a, 5b, and the upper wall 5c of the bracket 5.

The control unit 85' is disposed along the cover member 94 forming the external end surface of the case 90, and bolted to the cover member 94, occupying the position opposite the chain sprocket 17. The control unit 85', of approximately an elliptic shape, is formed, at the center, with a through hole 85'a, and the left end of the crankshaft 13 passes through the through hole 85'a transversely outwardly.

The control unit 85' is comprised of a unit body 85'b and a control cover 85'c, of Al alloy, for housing the unit body, and fastened with bolts 200, at three bosses 85'f formed on the control cover 85'c, to heat releasing seats 94a of the cover member 94. The unit body 85'b, as shown in Fig.20, is arranged such that a connector 145 used for connecting lead wires 134a, 140a from the respective sensors 132, 140, a CPU 146, a shunt resistor 147, and a capacitor 148, are disposed around an opening 85'a, of a substrate 85'd, and also FETs 149 (transistors) at the front end. Numerals 150, 151 designate connectors used for connecting power cables (not shown) of the electric motor 82 and the battery 84, and numeral 85'e designates escapes for avoiding interference with the bosses 85'f.

The control unit 85' is arranged so as to determine the magnitude of the pedal force applied to the pedal 15, from the detected value of the potentiometer 134, to read the vehicle speed from the speed sensor 140, to calculate the magnitude of the auxiliary drive force based on a built-in auxiliary drive force control map, and to supply an electric current corresponding to the auxiliary drive force, from the battery 84 to the electric motor 82. The auxiliary drive force is set such that the ratio of the auxiliary force to the pedal force exerted by the rider will be nearly one to one for the vehicle speed in the range of 0 to 15 Km/h, decreased gradually for the vehicle speed over 15 km/h, and reduced to zero when the vehicle speed reaches 24 Km/h.

Now, functions and effects of this embodiment will be described.
According to this embodiment, the control unit 85' is disposed along the left side surface of the unit case 90 of the power unit 83 and bolted to the case 90. Therefore, a large cover member and additional mounting brackets required for the conventional system in which these units are disposed separately, can be eliminated; manufacturing costs can be lowered by reducing assembling man hour and the number of parts; and also compact design and weight saving can be effected.

Further, these two units 83, 85' are integrated together, so that the length of wires from the control box 85'b to the motor 82, potentiometer 134, speed sensor 140 etc, can be decreased, thereby simplifying wiring around the control unit 85', as well as reducing noises; and further, the degree of freedom can be improved for the layout of the components mounted on the vehicle.

Furthermore, the control unit 85' is disposed by making effective use of the vacant space between the unit case 90 and the crank 14, so that expansion of the layout space can be avoided. Also, the control cover 85'c for covering the unit body 85'b is disposed facing the outside, so that damage due to flying stones etc can be prevented, and the control cover 85'c serves as a component for appearance, thereby eliminating a special cover plate.

Moreover, the bosses 85'f of the control unit 85' are in contact with the heat releasing seat 94a formed on the unit case 90, so that heat from the control unit 85' can be released to the unit case 90, thereby preventing temperature rise of the unit body 85'b. In addition, the control cover 85'c of the control unit 85' is exposed to a running wind, which also prevents the temperature rise.
[0038]

According to this embodiment, at the center of the control unit 85' is formed the through hole 85'a through which the crankshaft 13 passes, so that interference with the crankshaft 13 can be avoided, and the control unit 85' can be configured in a reasonable shape while disposed on the side of the unit case 90, thereby improving external appearance as well as housing efficiency.

Further, the control unit 85' is disposed on the side opposite to the chain sprocket 17, so that appropriate layout balance can be obtained between components on the right and left sides of the vehicle, which also improves external appearance and housing efficiency.
[0040]

Moreover, the control unit 85' is disposed on the outside of the unit case 90, so that maintenance or replacement of the control unit 85 will be easier than when the control unit 85' is disposed Inside the unit case 90.

According to an embodiment of the invention, as described above, the control unit is disposed along the outer surface of the casing and fixed thereto. Therefore, heat from the control unit can be released to the casing, thus improving the durability of the control unit; the bracket For mounting the control unit itself can be eliminated, reducing assembling man hour as well as the number of parts; and the cover, if attached, can be kept small in size. Further, both units are integrated together, so that shorter wires can be utilized, which simplifies the wiring, the degree of freedom can be improved for the layout of the vehicle body, thereby effecting a smaller-sized vehicle as a whole.

Further, the control unit is disposed along the outer surface of the casing. Therefore, the width of the crankshaft can be kept small, thus providing a larger bank angle at the time of cornering, and awkward feeling can be reduced when pedaling. In addition, maintenance work or mounting and removal of the control unit will be easier compared with the case of the control unit being disposed inside the casing.

According to another embodiment of the present invention, the control unit is disposed such that at least a part of said control unit is hidden or received within a mounting bracket. Therefore, damage due to external forces can be prevented without additional separate covers, and the vacant space can be made effective use for the arrangement, thereby effecting a more compact design.

According to still another embodiment of the present invention, the control unit and pedal force sensor are disposed along the outer surface. Therefore, heat releasing capacity of the control unit can be improved, and manufacturing costs can be lowered by reducing assembling man hour as well as the number of parts, providing the same effects as in the invention of claim 1.

According to a further embodiment of the present invention, the reaction force receiving section and the angle detection section of the pedal sensor for detecting pedal force, are formed separately and disposed along the outer surface of the casing. Therefore, the degree of freedom can be improved for the arrangement of these components, compared with the arrangement of the reaction force receiving section and the angle detection section being integrated together; the dimension of the protrusion of the casing can be kept small, thereby effecting a smaller-sized case as a whole; and accordingly the degree of freedom can be improved for the layout in mounting these components on the vehicle.

According to a still further embodiment of the present invention, the rotary shaft of the angle detection section is disposed in the direction vertical to the crankshaft, so that performance of assembly work can be improved, and the dimension of the protrusion of the casing can be kept small.

According to another embodiment of the present invention, the pedal force sensor is disposed such that at least a part of said pedal force sensor is hidden within a mounting bracket when viewed in profile, and according to the invention of claim 8, the control unit, pedal force sensor, and speed sensor are disposed such that at least a part of each of said control unit, pedal force sensor, and speed sensor is hidden within a mounting bracket when viewed in profile. Therefore, damage due to external forces can be prevented.

According to a further embodiment of the present invention, the speed sensor is disposed along the outer surface of the casing of the power unit and fixed thereto, so that manufacturing costs can be lowered by reducing assembling man hour as well as the number of parts, providing the same effects as in the invention of claim 1.

According to a still further embodiment of the invention of claim 1, as described above, the control unit is disposed along the transversely external end surface of a casing of the power unit and fixed to the casing. Therefore, a large cover member and additional mounting brackets can be eliminated compared with a system in which these units are disposed separately, and manufacturing costs can be lowered by reducing assembling man hour and the number of parts. In addition, these two units are integrated together, so that wiring of the wire harness around the control unit can be simplified; the degree of freedom for the layout can be improved; and compact design can be effected, as well as easy maintenance.

According to another embodiment of the present invention, the control unit is formed with the through hole through which the crankshaft passes, so that interference with the crankshaft can be avoided, and external appearance as well as housing efficiency can be improved.

According to still another embodiment of the invention, the control unit is disposed on the side opposite to the chain sprocket, so that appropriate layout balance can be obtained between components on the right and left sides of the vehicle, which also improves external appearance and housing efficiency.

## Claims

1. An electric motor-assisted bicycle (1;80) comprising a power unit (22,83) for outputting of a pedal force inputted to a crankshaft (13) and/or an auxiliary force received from an electric motor (21;82), and a control unit (24;85;85') for variably controlling the output of said electric motor (21;82) in accordance with running conditions detected, **characterized in that** said control unit (24;85;85') being fastened to the outer surface of a casing (26;90) accommodating said power unit (22;83).

2. An electric motor-assisted bicycle according to claim 1, **characterized in that** said control unit (24;85) being disposed along the outer surface of said casing (26;90) in parallel to said crankshaft (13).

3. An electric motor-assisted bicycle according to claim 1 or 2, **characterized in that** said control unit (24;85) is disposed such that at least a part of said control unit (24;85) is hidden or received within a mounting bracket (5) for mounting said power unit (22;83) on a body frame (2) when viewed transverse to a driving direction.

4. An electric motor-assisted bicycle according to at least one of the preceding claims 1 to 3, **characterized in that** a pedal force sensor (27;86) is provided for detecting said pedal force and that said control unit (24;85) and pedal force sensor (27;86) are disposed along the outer surface, parallel to the crankshaft (13), of said casing (26;90) of said power unit (22;83).

5. An electric motor-assisted bicycle according to claim 4, **characterized in that** said power unit (83) is disposed coaxially with the crankshaft (13) and provided with a planetary gear mechanism (92) in which the pedal force is inputted to a planetary gear (101) and outputted from one of a ring or internal gear (102) and a sun gear (100), and wherein said pedal force sensor (86) is formed separately with a reaction force receiving section (125) for urging the other of said ring gear (102) and sun gear (100) to rotate against the reaction force acting on said other of said ring gear (102) and sun gear (100), and with an angle detection section (126) for detecting the rotation angle of said other of said ring gear (102) and sun gear (100), said reaction force receiving section (125) and angle detection section (126) being disposed along the outer surface, parallel to the crankshaft (13), of said casing (90).

6. An electric motor-assisted bicycle according to claim 5, **characterized in that** a rotary shaft (133) of said angle detection section (126) is disposed in the direction vertical to the crankshaft (13).

7. An electric motor-assisted bicycle according to at least one of the preceding claims 4 to 6, **characterized in that** said pedal force sensor (27;80) is disposed such that at least a part of said pedal force sensor (27;86) is hidden or received within a mounting bracket (5) for mounting said power unit (22;83) on a body frame, when viewed transverse to a driving position.

8. An electric motor-assisted bicycle according to at least one of the preceding claims 4 to 7, **characterized in that** a speed sensor (140) for detecting the vehicle speed is disposed along the outer surface, parallel to the crankshaft (13), of the casing (26;90) of said power unit (22;83).

9. An electric motor-assisted bicycle according to at least one of the preceding claims 4 to 8, **characterized in that** said control unit (22;83), pedal force sensor (27;86), and speed sensor (140) are disposed such that at least a part of each of said control unit (22;83), pedal force sensor (27;80), and speed sensor (140) is hidden or received within the mounting bracket (5) for mounting said power unit (22;83) on a body frame (2), when viewed transverse to a driving direction.

10. An electric motor-assisted bicycle according to at least one of the preceding claims 1 to 9, **characterized in that** said control unit (24;85) and/or pedal force sensor (27;86) and/or a speed sensor (140) are detachably mounted to said casing (26;90).

11. An electric motor-assisted bicycle according to claim 1, **characterized in that** said control unit (85') is disposed along and fixed to the transversely external end surface of said casing (90) of said power unit (83).

12. An electric motor-assisted bicycle according to claim 11, **characterized in that** said control unit (85') has a through hole (85a'), and said crankshaft (13) passes through said through hole (85a').

13. An electric motor-assisted bicycle according to claim 11 or 12, **characterized in that** said control unit (85') is disposed on a side opposite to that on which a sprocket (17) for receiving the resultant force from said power unit (83) is disposed.

14. An electric motor-assisted bicycle according to at least one of the preceding claims 1 to 13, **characterized in that** said control unit (24;85;85') is adapted to calculate the magnitude of the auxiliary drive force according to an auxiliary drive force control map.

15. An electric motor-assisted bicycle according to at least one of the preceding claims 1 to 14, **characterized in that** said control unit (24;85;85') is adapted to set said auxiliary drive force such that a ratio of the auxiliary drive force to the pedal force exerted a rider is nearly one to one for a vehicle speed in a range of 0 to 15 km/h, decreases gradually for the vehicle speed of above 15 km/h and is reduced to zero when the vehicle speed reaches 24 km/h.
